# EUROPEAN PATENT APPLICATION

(11) **EP 4 801 026 A1**
(43) Date of publication of application: **02.09.2026**
(21) Application number: 26158908.9
(22) Date of filing: 16.02.2026
(51) Int. Cl.: H04N 7/18

(54) **METHOD FOR PROCESSING SECURITY DATA, APPARATUS FOR PROCESSING SECURITY DATA, ELECTRONIC DEVICE, AND STORAGE MEDIUM**

(30) Priority: 28.02.2025 CN 202510246036
(71) Applicant: Shenzhen Oceanwing Smart Innovations Technology Co., Ltd, Shenzhen City, Guangdong Province 518055 (CN)
(72) Inventor: CHEN, Lei, Shenzhen City 518055 (CN); JIANG, Weizhong, Shenzhen City 518055 (CN)
(74) Representative: De Arpe Tejero, Manuel

(57) **Abstract**

The present application relates to a method for processing security data, an apparatus for processing security data, an electronic device, and a storage medium. The method includes: obtaining (101, 201) a set of security videos collected by a plurality of security cameras; determining (102) a subset of security videos having a preset association relationship from the set of security videos; determining (103) whether a display instruction for the subset of security videos is received by a display terminal; and controlling (104, 206) the display terminal to associatively display each security video in the subset of security videos, in a case where the display instruction is received by the display terminal. The preset association relationship indicates that events represented by security videos in the subset of security videos have the preset association relationship.

## Description

### TECHNICAL FIELD

The present disclosure relates to the field of security technologies, and in particular to a method for processing security data, an apparatus for processing security data, an electronic device, and a storage medium.

### BACKGROUND

In existing security technologies, there are numerous issues in processing video data collected by security cameras. For instance, after a security camera collects security videos, when a user needs to view events related to persons, vehicles, pets, etc., it is generally not possible to view all security videos of an event at once without repetition and omission in content. For example, the user may need to repeatedly switch to players of different security cameras to view individual security videos in order to restore a complete picture of the event.

Evidently, how to display the occurrence process of an event more rapidly, intuitively, and comprehensively, thereby improving user experience in security scenarios, is a technical problem worthy of attention.

### SUMMARY

As above, some embodiments of the present disclosure provide a method for processing security data, an apparatus for processing security data, an electronic device, and a storage medium, to address some or all of the above technical problems.

In a first aspect, some embodiments of the present disclosure provide a method for processing security data. The method includes: obtaining a set of security videos collected by a plurality of security cameras; determining a subset of security videos having a preset association relationship from the set of security videos, where the preset association relationship indicates that events represented by security videos in the subset of security videos have the preset association relationship; determining whether a display instruction for the subset of security videos is received by a display terminal; and controlling the display terminal to associatively display each security video in the subset of security videos, in a case where the display instruction is received by the display terminal.

In some embodiments, determining the subset of security videos having the preset association relationship from the set of security videos, may include: determining video feature data of security videos in the set of security videos; determining whether the security videos in the set of security videos have a preset association relationship based on the determined video feature data; and determining a set of security videos having the preset association relationship as the subset of security videos.

In some embodiments, determining the video feature data of the security videos in the set of security videos, may include: determining at least one of: generation time features of the security videos, image features of the security videos, biological features of the security videos, and text features of the security videos.

In some embodiments, whether the security videos have the preset association relationship may be determined through determining similarity of the video feature data of the security videos, or whether the security videos have the preset association relationship may be determined through determining whether the video feature data of the security videos belong to a same clustering cluster.

In some embodiments, controlling the display terminal to associatively display each security video in the subset of security videos, may include: controlling a single display terminal to associatively display each security video in the subset of security videos through a multi-channel display manner.

In some embodiments, after obtaining the set of security videos collected by the plurality of security cameras, the method may further include: sequentially determining, according to an order of generation time, whether a security video in the set of security videos is a target security video, where the target security video represents a target security event; controlling the display terminal to display an event notification of the target security event, in a case where the target security video in the set of security videos is determined for a first time; and controlling the display terminal to not display the event notification of the target security event, in a case where the target security video in the set of security videos is not determined for the first time.

In some embodiments, the target security video may be a video related to the target security event, and the target security event may be a preset security event or a security event having a preset feature.

In some embodiments, after determining the subset of security videos having the preset association relationship from the set of security videos, the method may further include: determining description information corresponding to the subset of security videos, where the description information includes at least one of: an object behavior, an event location, and an event result; and controlling the display terminal to display an event notification with the description information as an event title.

In some embodiments, after obtaining the set of security videos collected by the plurality of security cameras, the method may further include: determining a quantity of different target security events represented by the set of security videos; and controlling the display terminal to display the quantity.

In some embodiments, determining the subset of security videos having the preset association relationship from the set of security videos, may include: determining a security video including a target object from the set of security videos; and determining a set of security videos including the target object as the subset of security videos having the preset association relationship.

In some embodiments, after determining the subset of security videos having the preset association relationship from the set of security videos and before determining whether the display instruction for the subset of security videos is received by the display terminal, the method may further include: extracting highlight images from security videos in the subset of security videos, where each of the highlight images is a highlight picture or a highlight video; generating a thumbnail corresponding to the subset of security videos based on the extracted highlight images; and controlling the display terminal to display the thumbnail.

In some embodiments, generating the thumbnail corresponding to the subset of security videos based on the extracted highlight images, may include: splicing the extracted highlight images according to a chronological order to generate the thumbnail corresponding to the subset of security videos; or compositing the extracted highlight images in a grid-image form to generate the thumbnail corresponding to the subset of security videos.

In a second aspect, some embodiments of the present disclosure provide an apparatus for processing security data. The apparatus includes the following units.

An obtaining unit is configured to obtain a set of security videos collected by a plurality of security cameras.

A first determination unit is configured to determine a subset of security videos having a preset association relationship from the set of security videos. The preset association relationship indicates that events represented by security videos in the subset of security videos have the preset association relationship.

A second determination unit is configured to determine whether a display instruction for the subset of security videos is received by a display terminal.

A first control unit is configured to, in a case where the display instruction is received by the display terminal, control the display terminal to associatively display each security video in the subset of security videos.

In a third aspect, some embodiments of the present disclosure provide an electronic device. The electronic device may include a memory and a processor. The memory may be configured to store a computer program. The processor may be configured to execute the computer program stored in the memory. The processor, when the computer program is executed, may be configured to implement any embodiment of the method for processing security data in the first aspect above.

In a fourth aspect, some embodiments of the present disclosure provide a computer-readable storage medium. The computer-readable storage medium may store a computer program. When the computer program is executed by a processor, any embodiment of the method for processing security data in the first aspect above may be implemented.

In a fifth aspect, some embodiments of the present disclosure provide a computer program product. The computer program product may include computer-readable code, and when the computer-readable code is run on a device, a processor in the device may be caused to implement any embodiment of the method for processing security data in the first aspect above.

The method for processing security data provided by some embodiments of the present disclosure may obtain the set of security videos collected by the plurality of security cameras. Then, the subset of security videos having the preset association relationship may be determined from the set of security videos. The preset association relationship may indicate that events represented by security videos in the subset of security videos have the preset association relationship. After that, whether the display instruction for the subset of security videos is received by the display terminal may be determined. Subsequently, in a case where the display instruction is received by the display terminal, the display terminal may be controlled to associatively display each security video in the subset of security videos. Accordingly, an occurrence process of a security event may be displayed rapidly, intuitively, and comprehensively, thereby improving user experience in a security scenario.

### BRIEF DESCRIPTION OF THE DRAWINGS

The drawings herein are incorporated into and constitute part of the specification, show embodiments consistent with the present disclosure, and are used together with the specification to explain the principles of the present disclosure.

To describe the technical solutions in some embodiments of the present disclosure or the related art more clearly, the accompanying drawings required for describing the embodiments or the related art will be briefly introduced below. Obviously, the drawings described below are merely part of the drawings of the embodiments of the present disclosure, and other drawings can be obtained by those skilled in the art based on these drawings without creative effort.

One or more embodiments are shown by way of example with reference to the corresponding drawings, which may not limit the embodiments. Elements in the drawings with the same reference numerals denote similar elements. Unless otherwise stated, the figures in the drawings are not drawn to scale.
FIG. 1 is a flowchart of a method for processing security data according to some embodiments of the present disclosure.
FIG. 2 is a flowchart of another method for processing security data according to some embodiments of the present disclosure.
FIG. 3A is a schematic view of security data displayed on a display terminal in a method for processing security data according to some embodiments of the present disclosure, where intelligent notifications are shown.
FIG. 3B is a schematic view of security data displayed on a display terminal in a method for processing security data according to some embodiments of the present disclosure, where an event list is shown.
FIG. 3C is a schematic view of security data displayed on a display terminal in a method for processing security data according to some embodiments of the present disclosure, where multi-channel playback of security videos is shown.
FIG. 3D is a schematic view of security data displayed on a display terminal in a method for processing security data according to some embodiments of the present disclosure, where playback of security videos of only a target object is shown.
FIG. 4 is a schematic structural view of an apparatus for processing security data according to some embodiments of the present disclosure.
FIG. 5 is a schematic structural view of an electronic device according to some embodiments of the present disclosure.

### DETAILED DESCRIPTION

Some embodiments of the present disclosure will now be described in detail with reference to the accompanying drawings. It is evident that the described embodiments are part of the embodiments of the present disclosure and not all of them. It should be noted that unless otherwise specified, the relative arrangements of components and operations, numerical expressions, and numerical values set forth in these embodiments do not limit the scope of the present disclosure.

It should be understood by those skilled in the art that terms such as "first" and "second" in the embodiments of the present disclosure are used solely to distinguish between different objects such as operations, devices, or modules and do not carry any specific technical meaning, nor do they indicate any logical order among them.

It should also be understood that in the present embodiments, "a plurality" may refer to two or more, and "at least one" may refer to one, two, or more.

It should further be understood that for any component, data, or structure mentioned in the embodiments of the present disclosure, unless explicitly limited or implied otherwise by the context, it is generally understood to refer to one or more.

Additionally, the term "and/or" in the present disclosure merely describes an associative relationship between related objects, indicating that three relationships may exist. For example, "A and/or B" may indicate the following three scenarios: A exists alone, both A and B exist, or B exists alone. Furthermore, the character "/" in the present disclosure generally indicates an "or" relationship between the preceding and following related objects.

It should also be understood that the description of each embodiment in the present disclosure emphasizes the differences between the embodiments. Similarities or identical aspects may be cross-referenced, and for the sake of brevity, they are not redundantly elaborated.

The following description of at least one embodiment is merely illustrative and is not intended as any limitation on the present disclosure or its application or use.

Technologies, methods, and devices known to those skilled in the relevant field may not be discussed in detail but, where appropriate, should be considered part of the specification.

It should be noted that similar reference numerals and letters in the following drawings denote similar items. Thus, once an item is defined in one drawing, it may not require further discussion in subsequent drawings.

It should be noted that, in the absence of conflict, embodiments of the present disclosure and features thereof may be combined with each other. To facilitate the understanding of the embodiments of the present disclosure, the following describes the present disclosure in detail with reference to the accompanying drawings and embodiments. It is evident that the described embodiments are part of the embodiments of the present disclosure and not all of them. Based on the embodiments of the present disclosure, all other embodiments obtained by those skilled in the art without creative effort shall fall within the scope of protection of the present disclosure.

In order to solve the technical problem in the related art of how to more rapidly, intuitively, and comprehensively display an occurrence process of a security event, thereby improving user experience in a security scenario, some embodiments of the present disclosure provide a method for processing security data, an apparatus for processing security data, an electronic device, and a storage medium, which may rapidly, intuitively, and comprehensively display the occurrence process of the security event, thereby improving the user experience in the security scenario.

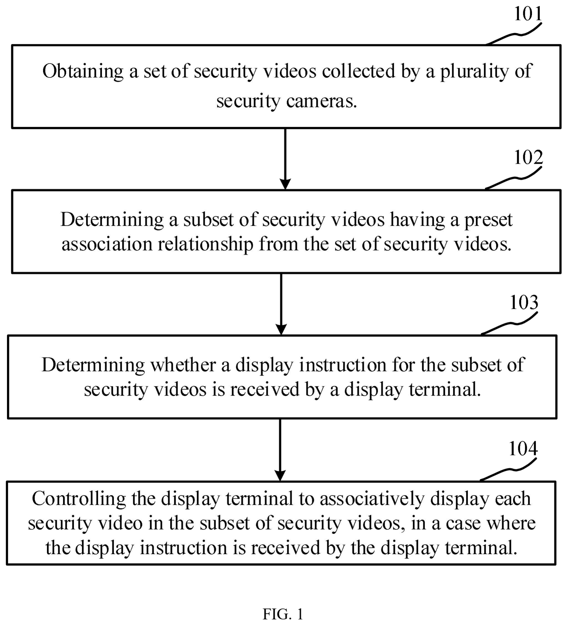

FIG. 1 is a flowchart of a method for processing security data according to some embodiments of the present disclosure. The method may be applied to one or more electronic devices such as security cameras, smart phones, notebook computers, desktop computers, portable computers, servers, and the like. In addition, an execution subject of the method may be hardware or may be software. When the execution subject is hardware, the execution subject may be one or more of the above electronic devices. For example, a single electronic device may execute the method, or multiple electronic devices may cooperate with each other to execute the method. When the execution subject is software, the method may be implemented as multiple pieces of software or software modules, or may be implemented as a single piece of software or software module. No specific limitation is made herein.

As shown in FIG. 1, the method may include the following operations.

At operation 101, a set of security videos collected by a plurality of security cameras may be obtained.

In some embodiments, the security camera may be a camera used for security monitoring and may be configured to collect a security video. As an example, the security camera may be arranged indoors or may be arranged outdoors. For example, in community security monitoring, the security cameras may be cameras installed at various corners; in shopping mall security monitoring, the security cameras may be cameras distributed on various floors and passages; in home security monitoring, the security cameras may be cameras installed indoors or outdoors.

Each camera may be configured to collect one or more security videos. Accordingly, a plurality of security cameras may be configured to collect a plurality of videos, that is, the above-mentioned set of security videos. In other words, the set of security videos may be a set of security videos collected by a plurality of security cameras. For example, in a home security monitoring system, all or part of the security videos collected by all security cameras may form one set of security videos.

At operation 102, a subset of security videos having a preset association relationship may be determined from the set of security videos.

In some embodiments, the preset association relationship may indicate that events represented by the security videos in the subset of security videos have a preset association relationship. For example, the preset association relationship may indicate that a time difference between occurrence times of the events represented by the security videos in the subset of security videos is less than or equal to a preset threshold. For another example, the preset association relationship may indicate that occurrence locations of the events represented by the security videos in the subset of security videos are the same. For still another example, the preset association relationship may indicate that the events represented by the security videos in the subset of security videos include the same target object, and the like. For instance, security videos collected within the same time period, or security videos of the same location, may have the above-mentioned preset association relationship.

The subset of security videos may be a set of security videos having the preset association relationship screened from the set of security videos, for example, a subset including security videos collected by security cameras in a particular area.

In some embodiments, the subset of security videos having the preset association relationship may be determined from the set of security videos through a pre-set algorithm or rule. In some embodiments, the subset of security videos having the preset association relationship may be determined from the set of security videos through manual marking.

At operation 103, whether a display instruction for the subset of security videos is received by a display terminal may be determined.

In some embodiments, the display instruction may be configured to indicate displaying the subset of security videos. For example, the display instruction may be an instruction issued by a user or other object through clicking a certain button on a monitoring operation interface.

In some embodiments, in a case where the above-mentioned execution subject is the display terminal, the execution subject may be configured to determine by itself whether it has received the display instruction for the subset of security videos. In a case where the above-mentioned execution subject is not the display terminal, the execution subject may be configured to receive a signal from the display terminal to determine whether the display terminal has received the display instruction for the subset of security videos.

The display terminal may be configured to display a security video. As an example, the display terminal may include at least one player and/or at least one screen.

At operation 104, in a case where the display instruction is received by the display terminal, the display terminal may be controlled to associatively display each security video in the subset of security videos.

In some embodiments, the associatively displaying may be that each security video in the subset of security videos is displayed simultaneously according to a certain rule. For example, a plurality of security videos may be displayed in one screen or player, or a plurality of security videos may be displayed simultaneously in a plurality of screens or players.

In some embodiments, in a case where the above-mentioned execution subject is the display terminal, the execution subject may be configured to directly associatively display each security video in the subset of security videos. In a case where the above-mentioned execution subject is not the display terminal, the execution subject may be configured to send a control signal to the display terminal, so as to control the display terminal to associatively display each security video in the subset of security videos.

In some embodiments of the present embodiment, the following manner may be adopted to control the display terminal to associatively display each security video in the subset of security videos.

A single display terminal may be controlled to associatively display each security video in the subset of security videos through a multi-channel display manner.

The multi-channel display may be a manner in which a plurality of videos are displayed simultaneously on one display terminal. For example, four or more security videos may be displayed on one screen at the same time, where each channel may correspond to one security video. In practice, the multi-channel display may be implemented through split-screen display or the like.

It may be understood that, in the above embodiments, the single display terminal may be configured to associatively display each security video in the subset of security videos through the multi-channel display manner. In this way, a user may view a plurality of security videos having the preset association relationship simultaneously through only one display terminal. Accordingly, compared with viewing the security videos one by one, efficiency of viewing the security videos may be improved, which may be convenient for the user to simultaneously analyze a plurality of security videos to understand a security situation.

In some embodiments of the present embodiment, after obtaining the set of security videos collected by the plurality of security cameras, the following operations may further be performed.

Firstly, whether a security video in the set of security videos is a target security video may be sequentially determined according to an order of generation time.

The target security video may represent a target security event. The target security video may be a video related to the target security event. For example, in a case where a theft event occurs as the target security event, a security video of a region where the theft event occurs may be taken as the target security video. The target security event may be a preset security event, or may be a security event having a preset feature, such as a fire event, a dangerous event, an important event, and the like.

The generation time may represent a time at which the security video is generated.

As an example, in a case where the set of security videos includes three security videos, when an order of generation time of the three security videos is: security video 1, security video 2, and security video 3, whether the security video 1 is the target security video may be determined first, then whether the security video 2 is the target security video may be determined, and next whether the security video 3 is the target security video may be determined.

Secondly, in a case where the target security video in the set of security videos is determined for a first time, the display terminal may be controlled to display an event notification of the target security event. In a case where the target security video in the set of security videos is not determined for the first time, the display terminal may be controlled to not display the event notification of the target security event.

The event notification may be configured to prompt a user or other objects that a target security event has occurred. For example, a prompt box may pop up on an interface of the display terminal, so as to display the event notification.

It may be understood that, in the above embodiments, for a plurality of security videos having the preset association relationship, the display terminal may be configured to display the event notification only once in a case where the target security video is determined for the first time. Accordingly, a chance of repeated notifications of the same target security event may be reduced, thereby reducing frequent disturbance to the user.

In some embodiments of the present embodiment, after determining the subset of security videos having the preset association relationship from the set of security videos, the following operations may further be performed.

Firstly, description information corresponding to the subset of security videos may be determined.

The description information may include at least one of the following: an object behavior, an event location, and an event result. For example, in a home security video, the object behavior may indicate theft, the event location may indicate indoors, and the event result may indicate property loss.

Secondly, the display terminal may be controlled to display an event notification with the description information as an event title.

In some embodiments, in a case where the above-mentioned execution subject is the display terminal, the execution subject may be configured to directly display the event notification with the description information as the event title. In a case where the above-mentioned execution subject is not the display terminal, the execution subject may be configured to send a signal to the display terminal, so as to control the display terminal to display the event notification with the description information as the event title.

It may be understood that, in the above embodiments, since the display terminal may be configured to take at least one of the object behavior, the event location, and the event result as the event title of the event notification, the user may intuitively view at least one of the object behavior, the event location, and the event result, thereby fully understanding a situation in a security area.

In some embodiments of the present embodiment, after obtaining the set of security videos collected by the plurality of security cameras, the following operations may further be performed.

Firstly, a quantity of different target security events represented by the set of security videos may be determined.

Secondly, the display terminal may be controlled to display the quantity.

In some embodiments, different target security events may be identified and counted through analyzing the security videos in the set of security videos, so as to obtain the quantity of the target security events. Then, the quantity may be displayed on the display terminal.

It may be understood that, in the above embodiments, through controlling the display terminal to display the quantity of the target security events, a user or other objects may fully understand a situation in the security area.

In some embodiments of the present embodiment, the following manner may be adopted to determine the subset of security videos having the preset association relationship from the set of security videos.

Firstly, a security video including a target object may be determined from the set of security videos.

Secondly, a set of security videos including the target object may be determined as the subset of security videos having the preset association relationship.

The target object may include at least one of the following: a person, a vehicle, a pet, and the like.

It may be understood that, in the above embodiments, a plurality of security videos including the same target object may be determined and associatively displayed, which may be convenient for a user or other objects to rapidly, intuitively, and comprehensively display related information of the target object.

In some embodiments of the present embodiment, after determining the subset of security videos having the preset association relationship from the set of security videos and before determining whether the display instruction for the subset of security videos is received by the display terminal, the following operations may further be performed.

Firstly, highlight images may be extracted from security videos in the subset of security videos.

Each highlight image may be a highlight picture or a highlight video.

Secondly, a thumbnail corresponding to the subset of security videos may be generated based on the extracted highlight images.

In some embodiments, various manners may be adopted to generate the thumbnail corresponding to the subset of security videos based on the extracted highlight images. For details, reference may be made to the description below, and details are not repeated herein.

Thirdly, the display terminal may be controlled to display the thumbnail.

It may be understood that, in the above embodiments, through displaying the thumbnail corresponding to the subset of security videos, the highlight images may be fully displayed to a user or other objects.

In some application scenarios of the above embodiments, one of the following manners may be adopted to generate the thumbnail corresponding to the subset of security videos based on the extracted highlight images.

In a first manner, the extracted highlight images may be spliced according to a chronological order, so as to generate the thumbnail corresponding to the subset of security videos. Accordingly, a dynamic thumbnail may be obtained.

In a second manner, the extracted highlight images may be composited in a grid-image form, so as to generate the thumbnail corresponding to the subset of security videos. Accordingly, a plurality of static or dynamic thumbnails may be obtained.

It may be understood that, in the above application scenarios, through splicing highlight images according to a chronological order of the highlight images in the video, a thumbnail showing temporal continuity may be generated. Through compositing the highlight images in a grid layout, the highlight images may be displayed intuitively.

It should be noted that, in a case of no conflict, technical features recorded in different embodiments may be included in the same embodiment. For brevity of description, details are not repeated herein.

The method for processing security data provided by some embodiments of the present disclosure may obtain the set of security videos collected by the plurality of security cameras. Then, the subset of security videos having the preset association relationship may be determined from the set of security videos. The preset association relationship may indicate that events represented by security videos in the subset of security videos have the preset association relationship. After that, whether the display instruction for the subset of security videos is received by the display terminal may be determined. Subsequently, in a case where the display instruction is received by the display terminal, the display terminal may be controlled to associatively display each security video in the subset of security videos. Accordingly, an occurrence process of a security event may be displayed rapidly, intuitively, and comprehensively, thereby improving user experience in a security scenario.

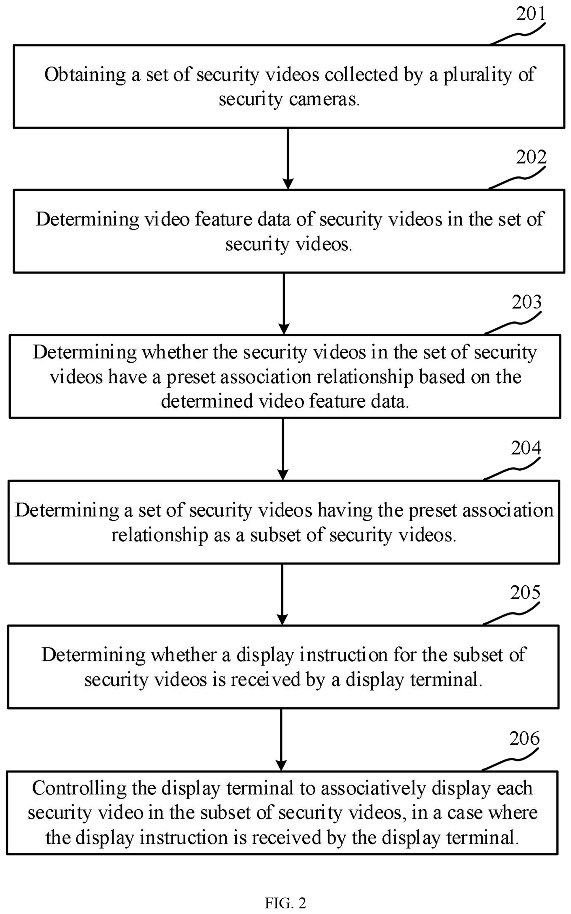

FIG. 2 is a flowchart of another method for processing security data according to some embodiments of the present disclosure. As shown in FIG. 2, the method may specifically include:

At operation 201, a set of security videos collected by a plurality of security cameras may be obtained.

In the present embodiments, the operation 201 may be substantially the same as the operation 101 in some embodiments corresponding to FIG. 1, and details are not repeated herein.

At operation 202, video feature data of security videos in the set of security videos may be determined.

In some embodiments, the video feature data may be feature data of a security video.

In some embodiments of the present embodiment, determining the video feature data of the security videos in the set of security videos may include: determining at least one of the following: generation time features of the security videos, image features of the security videos, biological features of the security videos, and text features of the security videos.

The generation time feature may be a feature related to a generation time of the security video. Through the generation time features, an order of generation of the security videos may be determined. For example, during event tracing, an occurrence order of security events may be determined according to the generation time features.

The image feature may be configured to reflect a feature of image content of the security video, such as colors, shapes, and the like. In target recognition, a particular target may be recognized according to the image feature. For example, a vehicle of a certain color may be recognized in a security video.

The biological feature may be a video feature related to a biological entity, such as a facial feature of a person in the video. For example, in access control security, an identity of a person may be recognized through a facial feature as the biological feature.

The text feature may be a feature related to text contained in the security video, such as a subtitle, text description information, and the like in the security video.

It may be understood that, in the above embodiments, the subset of security videos having the preset association relationship may be determined through at least one of the following: the generation time features of the security videos, the image features of the security videos, the biological features of the security videos, and the text features of the security videos. Accordingly, accuracy of determining whether the security videos have the preset association relationship may be improved.

In some embodiments, the video feature data may further be a resolution, a frame rate, and the like of the security video.

At operation 203, whether the security videos in the set of security videos have a preset association relationship may be determined based on the determined video feature data.

In some embodiments, whether the security videos have the preset association relationship may be determined through determining similarity of the video feature data of the security videos.

Alternatively, whether the security videos have the preset association relationship may be determined through determining whether the video feature data of the security videos belong to a same clustering cluster.

At operation 204, a set of security videos having the preset association relationship may be determined as a subset of security videos.

At operation 205, determining whether a display instruction for the subset of security videos is received by a display terminal.

In the present embodiments, the operation 205 may be substantially the same as the operation 103 in some embodiments corresponding to FIG. 1, and details are not repeated herein.

At operation 206, in a case where the display instruction is received by the display terminal, the display terminal may be controlled to associatively display each security video in the subset of security videos.

In the present embodiments, the operation 206 may be substantially the same as the operation 104 in some embodiments corresponding to FIG. 1, and details are not repeated herein.

It should be noted that, in addition to what described above, the present embodiments may further include corresponding technical features described in some embodiments corresponding to FIG. 1, so as to achieve technical effects of the method for processing security data shown in FIG. 1. For details, reference may be made to the related description of FIG. 1, and for brevity of description, details are not repeated herein.

The method for processing security data provided by some embodiments of the present disclosure may determine whether security videos have the preset association relationship through video feature data of the security videos, thereby improving accuracy of determining whether the security videos have the preset association relationship.

Some embodiments of the present disclosure are described below by way of examples. It should be noted that the following is only used to understand the technical solutions of the embodiments of the present disclosure, and does not constitute a limitation on a protection scope of the embodiments of the present disclosure.

Before introducing the solutions, technical terms involved in the solutions are first introduced as follows.

Contrastive language-image pretraining (CLIP), which is a multimodal pre-training neural network model, has a core idea of contrastive learning. The CLIP model may be trained through maximizing similarity between matched image-text pairs while minimizing similarity between unmatched image-text pairs. In detail, the CLIP model may adopt an image encoder, which is usually a convolutional neural network, such as a residual networks (ResNet), and a text encoder, which is usually a transformer model, such as a generative pre-trained transformer-3 (GPT-3), to respectively encode images and text into vector representations, and then may be optimized through contrastive learning.

Clustering is a data analysis technique, which aims to divide a set of objects into multiple clusters, such that objects within a same cluster are similar in some sense, while objects between different clusters are relatively different. Clustering analysis has been widely applied in many fields, including marketing, image processing, pattern recognition, bioinformatics, and the like.

You Only Look Once (YOLO) is a real-time object detection model (small model), which may complete an object detection task in a single forward propagation. Main characteristics of the YOLO model may include high speed and high accuracy, and the YOLO model may be suitable for real-time application scenarios. A basic idea of the YOLO model is to transform an object detection problem into a regression problem, and directly predict bounding boxes and class probabilities in an image through a neural network.

Vision Transformer (ViT) is an image classification model based on a Transformer architecture, which was proposed in 2020. The ViT may apply a Transformer model, which was originally used for natural language processing tasks, to computer vision tasks, particularly image classification. Different from traditional convolutional neural networks (CNNs), the ViT may adopt a self-attention mechanism to process image data.

ReID (Re-Identification) is a computer vision technology, which aims to identify and track a same pedestrian across cameras or across time periods. ReID technology has been widely applied in intelligent surveillance, security systems, intelligent transportation, and the like. A main objective of ReID is to solve pedestrian identification problems caused by factors such as illumination changes, posture changes, and occlusions under different camera viewpoints.

A solution in the related art may be the following. Current event detection technologies in the security industry may usually adopt multi-category detection technologies based on small YOLO-series models. Unit recordings (that is, security videos) may be generated through detecting objects such as persons, vehicles, pets, motions, and the like, and one message push, one event list card, and one screen player may be generated based on the unit recordings.

Problems existing in the above related-art solutions may include the following.

For a message push module, a message push mode using "person, vehicle, pet, motion" detection events as units ("notify upon detection/existence") may frequently disturb users. In a case where one event is sequentially triggered by five cameras and ten recordings are generated, the user may receive ten message pushes on an application (APP) terminal. A small model may fail to recognize or identify core event content in unit recordings, so that a user may be unable to quickly obtain key points of an event by reading notification text.

For an event list module, event cards may be formed in a fragmented manner through using person/vehicle/pet detection events as units. For full-day events, the user may fail to identify key events (such as intrusion or package delivery). For a single event, the user may fail to determine "what happened" and may fail to identify an association relationship among event cards.

For a player module, playback may be completed once by using "person, vehicle, pet" detection events as units, such that the user may fail to play all recordings of one event at one time without repetition (in time) and without omission (in content). For a device-centered player, in order to fully view an event recorded by multiple cameras, the user may need to repeatedly switch to players of different devices to view individual detection event clips, so as to restore a complete picture of the event.

Reasons leading to the above problems may include the following.

Currently, recognition capability of small YOLO-series models may be limited and may remain at a level of person/vehicle/pet detection. Thus, public-module chains of "message push-event list-playback page" may be designed only around detection results of person/vehicle/pet-namely "Human", "Vehicle", "Pet", and "Package" labels-so that the largest-granularity "event" conveyed to the user by these three modules may only be "Human", "Vehicle", "Pet", or "Package", with limited information content. Accordingly, the user may have to spend time opening notifications or video cards and playing videos one by one to understand "who did what at what place and with what result".

In view of the above, the present solutions may achieve the following effects.
1. Breaking a message push rule that uses "unit recordings" as notification frequency, and constructing an event-centered intelligent security event notification technology.

Notification frequency reduction: moving away from a "one recording, one notification" status quo to a "one event, one notification" principle. That is, in a case where one event (that is, the above-mentioned target security event) is recorded by multiple cameras (that is, the above-mentioned security cameras) and multiple recordings (that is, the above-mentioned security videos) are generated, a notification (that is, the above-mentioned event notification) may be sent to the user only when the first recording is triggered.

Event-text-based notification: generating a short title (that is, the above-mentioned event title) for an event through using a lightweight video text description deep learning model (Video Captioning), and using the title as notification text. The video text description deep learning model may be configured to determine a text title of a video.

2. Breaking a unit-recording-centered security event list, and constructing an event-centered intelligent security event list.

### 2.1 Recording clustering technology based on multimodal feature computation

(1) Whether recordings are to be clustered may be determined based on generation time features of videos (that is, the above-mentioned security videos).
(2) Whether recordings are to be clustered may be determined based on image features of videos. High-dimensional features of videos (such as texture features, edge features, and semantic features) may be encoded using ViT. Whether videos describe a same event (that is, the above-mentioned target security event) may be determined through computing similarity among features. In a case where the similarity exceeds a threshold, the videos may be aggregated.
(3) Whether recordings are to be clustered may be determined based on biological features of videos. Biological features of persons in videos, such as faces, body shapes, postures, and clothing, may be computed using ReID technology. Whether videos describe a same event may be determined through computing similarity among features. In a case where the similarity exceeds a threshold, the videos may be aggregated.
(4) Whether recordings are to be clustered may be determined based on text features of videos. Text descriptions for each recording may be generated using a video captioning model. Whether videos describe a same event may be determined through computing similarity among text features. In a case where the similarity exceeds a threshold, the videos may be aggregated.

### 2.2 Video text description based on Video Captioning (video text description model)

An optimal text description for a recording cluster may be generated using the video text description model. The description may be taken as an event title of a cluster event card, so that the user may quickly understand event content without clicking a recording card or playing a recording, namely "content known before viewing video".

### 2.3 (Daily) key event/emergency event summarization and fast filtering

Quantities of important events (such as package delivery, family members returning home, family members leaving home, and the like) and dangerous events (such as falling and climbing over walls) may be counted at a header of an event list page for a user, so that the user may view key events requiring attention for the day at a glance rather than having to browsing sequentially.

Clicking a corresponding icon may filter key events (that is, the above-mentioned target security events) from a daily clustered event list.

Clicking a corresponding face may filter event cards related to that person.

### 2.4 Intelligent thumbnail covers

Event thumbnails based on highlight GIF images: using a dynamic GIF image formed through temporally splicing highlight moments extracted from multiple recordings as an event thumbnail, so that the user may view list cards in an immersive manner.

Event thumbnails based on highlight grid images: compositing one event thumbnail using one to five grid images, so that the user may view highlights of multiple recordings at a glance.

### 3. Breaking a device-centered event replay player and constructing an event-centered intelligent player

### 3.1 Multi-channel replay

Recordings in a cluster may be replayed through multiple channels in one player/one screen using multi-channel streaming technology, so that the user may view a complete event without time repetition or content omission, without frequently switching players to restore a complete picture and boundary of the event.

### 3.2 Viewing only a target person

Video frames including a particular person may be located using ReID technology.

Summary: From a technical perspective, cognition of a home security assistant may be improved through redefining an "event" by a large model. From a product perspective, a user may be enabled to quickly view event key points in any of notification, event list, or player chains.

In some embodiments, semantic understanding capability of a multimodal large model may be leveraged to learn associations among individual "Human", "Vehicle", "Pet", and "Package" recordings, associations of delivery personnel through ReID plus text features and image features. In this way, the user may be clearly informed of "who did what at what place, with what result, and which recordings of which devices are involved". Consequently, the user may directly reach event key points at any link of a "notification-event list-playback page" chain, and may even be free from spending time playing multiple recordings or opening an APP. Thus, the user may understand a security event at a glance.

Some embodiments may include the following.

Timely notification: enabling the user to see what happened at a glance through focused notification text and appropriate notification frequency, and reducing frequent disturbance.

Event visibility at a glance: enabling the user to know content before viewing video through recording clustering, event text description, and event highlight thumbnail covers.

Single playback for complete restoration: enabling the user to view all cross-device recordings of one event without repetition or omission through using multi-channel replay with one progress bar.

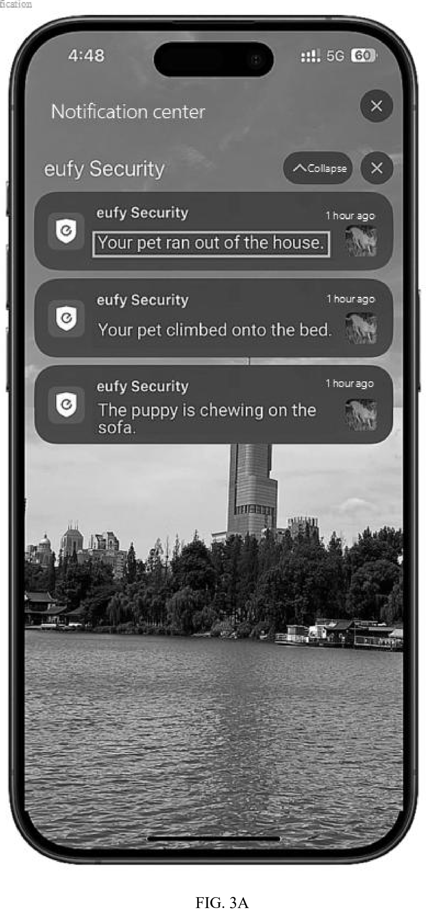

Intelligent notifications may be shown in FIG. 3A.

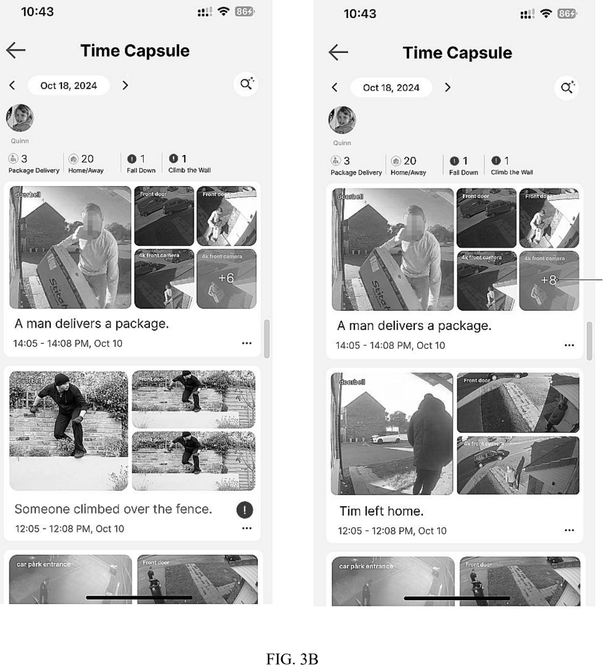

An event list may be shown in FIG. 3B, where one cluster may correspond to one card, one text description, and one intelligent thumbnail.

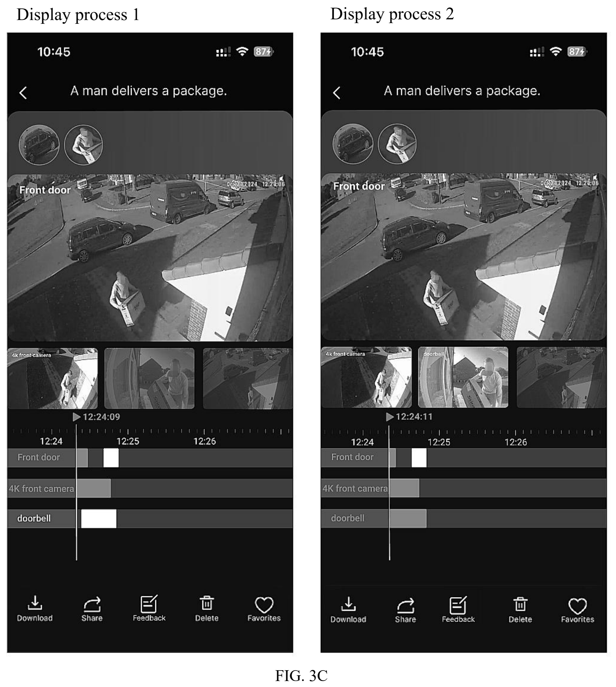

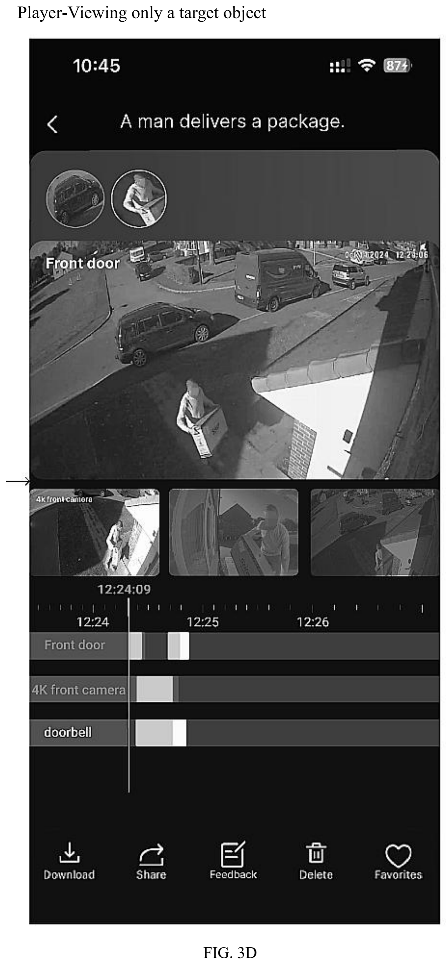

Security videos displayed by a player may be shown in FIG. 3C and FIG. 3D, where multi-channel playback and playback of only a target object may be performed.

It should be noted that, in addition to what described above, the present embodiments may further include technical features described in the above embodiments, so as to achieve technical effects of the above-described method for processing security data. For details, reference may be made to the above description, and for brevity, details are not repeated herein.

The method for processing security data provided by some embodiments of the present disclosure may realize efficient and timely recording notifications, generation of an event-centered intelligent security event list, and an event-centered intelligent player.

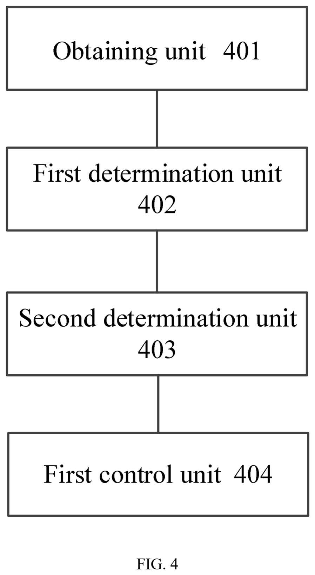

FIG. 4 is a schematic structural view of an apparatus for processing security data according to some embodiments of the present disclosure. The apparatus may include the following.

An obtaining unit 401 may be configured to obtain a set of security videos collected by a plurality of security cameras.

A first determination unit 402 may be configured to determine a subset of security videos having a preset association relationship from the set of security videos. The preset association relationship may indicate that events represented by security videos in the subset of security videos have the preset association relationship.

A second determination unit 403 may be configured to determine whether a display instruction for the subset of security videos is received by a display terminal.

A first control unit 404 may be configured to, in a case where the display instruction is received by the display terminal, control the display terminal to associatively display each security video in the subset of security videos.

In some embodiments, determining the subset of security videos having the preset association relationship from the set of security videos, may include the following operations.

Video feature data of security videos in the set of security videos may be determined.

Whether the security videos in the set of security videos have a preset association relationship may be determined based on the determined video feature data.

A set of security videos having the preset association relationship may be determined as a subset of security videos.

In some embodiments, determining the video feature data of the security videos in the set of security videos may include: determining at least one of the following: generation time features of the security videos, image features of the security videos, biological features of the security videos, and text features of the security videos.

In some embodiments, controlling the display terminal to associatively display each security video in the subset of security videos may include the following operations.

A single display terminal may be controlled to associatively display each security video in the subset of security videos through a multi-channel display manner.

In some embodiments, after obtaining the set of security videos collected by the plurality of security cameras, the apparatus may further include the following.

A third determination unit (not shown in the figure) may be configured to sequentially determine whether a security video in the set of security videos is a target security video according to an order of generation time. The target security video may represent a target security event.

A second control unit (not shown in the figure) may be configured to, in a case where the target security video in the set of security videos is determined for a first time, control the display terminal to display an event notification of the target security event.

A third control unit (not shown in the figure) may be configured to, in a case where the target security video in the set of security videos is not determined for the first time, control the display terminal to not display the event notification of the target security event.

In some embodiments, after determining the subset of security videos having the preset association relationship from the set of security videos, the apparatus may further include the following.

A fourth determination unit (not shown in the figure) may be configured to determine description information corresponding to the subset of security videos. The description information may include at least one of the following: an object behavior, an event location, and an event result.

A fourth control unit (not shown in the figure) may be configured to control the display terminal to display an event notification with the description information as an event title.

In some embodiments, after obtaining the set of security videos collected by the plurality of security cameras, the apparatus may further include the following.

A fifth determination unit (not shown in the figure) may be configured to determine a quantity of different target security events represented by the set of security videos.

A sixth control unit (not shown in the figure) may be configured to control the display terminal to display the quantity.

In some embodiments, determining the subset of security videos having the preset association relationship from the set of security videos, may include the following operations.

A security video including a target object may be determined from the set of security videos.

A set of security videos including the target object may be determined as the subset of security videos having the preset association relationship.

In some embodiments, after determining the subset of security videos having the preset association relationship from the set of security videos and before determining whether the display instruction for the subset of security videos is received by the display terminal, the apparatus may further include the following.

An extraction unit (not shown in the figure) may be configured to extract highlight images from security videos in the subset of security videos. Each highlight image may be a highlight picture or a highlight video.

A generation unit (not shown in the figure) may be configured to generate a thumbnail corresponding to the subset of security videos based on the extracted highlight images.

A seventh control unit (not shown in the figure) may be configured to control the display terminal to display the thumbnail.

In some embodiments, generating the thumbnail corresponding to the subset of security videos based on the extracted highlight images, may include the following operations.

The extracted highlight images may be spliced according to a chronological order, so as to generate the thumbnail corresponding to the subset of security videos.

Alternatively, the extracted highlight images may be composited in a grid-image form, so as to generate the thumbnail corresponding to the subset of security videos.

The apparatus for processing security data provided in the present embodiments may be the apparatus for processing security data shown in FIG. 4, and may be configured to perform all operations of the above-described methods for processing security data, thereby achieving technical effects of the above-described methods for processing security data. For details, reference may be made to the above description, and for brevity, details are not repeated herein.

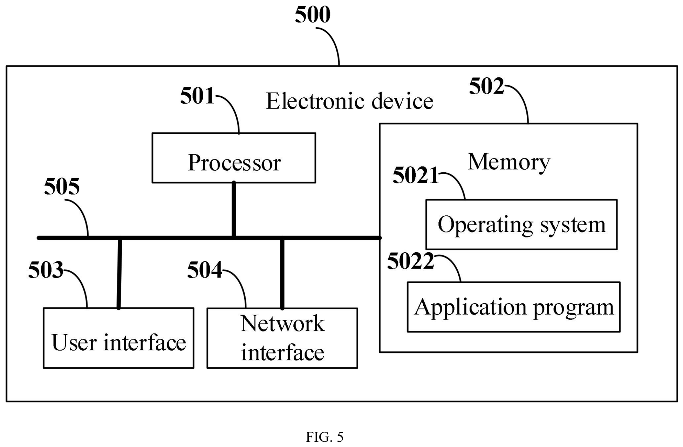

As shown in FIG. 5, FIG. 5 is a schematic structural view of an electronic device according to some embodiments of the present disclosure. The electronic device 500 shown in FIG. 5 may include: at least one processor 501, a memory 502, at least one network interface 504, and a user interface 503. Various components in the electronic device 500 may be coupled together through a bus system 505. It may be understood that the bus system 505 may be configured to implement connection communication among these components. The bus system 505, in addition to including a data bus, may further include a power bus, a control bus, and a status signal bus. However, for clarity of description, various buses may be collectively indicated as the bus system 505 in FIG. 5.

The user interface 503 may include a display, a keyboard, or a pointing device (for example, a mouse, a trackball, a touch pad, a touch screen, or the like).

It may be understood that the memory 502 in some embodiments of the present disclosure may be a volatile memory or a non-volatile memory, or may include both a volatile memory and a non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM), which may be used as an external cache. By way of example but not limitation, many forms of RAM may be available, such as a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DRRAM). The memory 502 described herein may be intended to include, but not be limited to, these and any other suitable types of memory.

In some embodiments, the memory 502 may be configured to store the following elements, executable units, or data structures, or subsets thereof, or extended sets thereof: an operating system 5021 and an application program 5022.

The operating system 5021 may include various system programs, such as a framework layer, a core library layer, a driver layer, and the like. The operating system 5021 may be configured to implement various basic services and to process hardware-based tasks. The application program 5022 may include various application programs, such as a media player, a browser, and the like. The application program 5022 may be configured to implement various application services. Programs for implementing the method of some embodiments of the present disclosure may be included in the application program 5022.

In some embodiments, by calling a program or an instruction stored in the memory 502, that is, calling a program or an instruction stored in the application program 5022, the processor 501 may be configured to perform the operations provided in the method embodiments, for example including the following.

A set of security videos collected by a plurality of security cameras may be obtained.

A subset of security videos having a preset association relationship may be determined from the set of security videos. The preset association relationship may indicate that events represented by security videos in the subset of security videos have the preset association relationship.

Whether a display instruction for the subset of security videos is received by a display terminal may be determined.

In a case where the display instruction is received by the display terminal, the display terminal may be controlled to associatively display each security video in the subset of security videos.

The method described in some embodiments of the present disclosure may be applied to the processor 501 or may be performed by the processor 501. The processor 501 may be an integrated circuit chip having signal processing capability. During implementation, each operation of the method may be completed by integrated logic circuits of hardware in the processor 501 or by instructions in a software form. The processor 501 may be a general-purpose processor, a digital signal processor (DSP), an application specific integrated circuit (ASIC), a field programmable gate array (FPGA), or other programmable logic devices, discrete gate or transistor logic devices, or discrete hardware components. The processor 501 may be configured to implement or execute the methods, operations, and logical block diagrams described in some embodiments of the present disclosure. The general-purpose processor may be a microprocessor or the processor may be any conventional processor, and the like. The operations of the method described in some embodiments of the present disclosure may be directly embodied as being executed by a hardware decoding processor, or may be executed by a combination of hardware and software units in the decoding processor. The software unit may be located in a storage medium well known in the art, such as a random access memory, a flash memory, a read-only memory, a programmable read-only memory, an electrically erasable programmable memory, or a register. The storage medium may be located in the memory 502. The processor 501 may be configured to read information from the memory 502 and complete the operations of the above method in combination with its hardware.

It may be understood that the embodiments described herein may be implemented using hardware, software, firmware, middleware, microcode, or a combination thereof. For hardware implementation, a processing unit may be implemented in one or more ASICs, DSPs, digital signal processing devices (DSPD), programmable logic devices (PLD), field-programmable gate arrays (FPGA), general-purpose processors, controllers, microcontrollers, microprocessors, other electronic units configured to perform the functions of some embodiments of the present disclosure, or combinations thereof.

For software implementation, the techniques described herein may be implemented through modules that execute the functions described herein. Software code may be stored in a memory and executed by a processor. The memory may be implemented inside the processor or external to the processor.

The electronic device provided in the present embodiments may be the electronic device shown in FIG. 5, and may be configured to perform all operations in the methods for processing security data described above, thereby achieving the technical effects of the methods for processing security data described above. For details, reference may be made to the foregoing descriptions, and for brevity, details may not be repeated herein.

Some embodiments of the present disclosure further provide a storage medium (a computer-readable storage medium). The storage medium may store one or more programs. The storage medium may include a volatile memory, such as a random access memory. The storage medium may include a non-volatile memory, such as a read-only memory, a flash memory, a hard disk, or a solid-state disk. The storage medium may include a combination of the above types of memories.

In a case where the one or more programs in the storage medium are executed by one or more processors, the method for processing security data executed on the electronic device side described above may be performed.

The processor may be configured to execute a program for processing security data stored in the memory, to implement the following operations in the method for processing security data executed on the electronic device side.

A set of security videos collected by a plurality of security cameras may be obtained.

A subset of security videos having a preset association relationship may be determined from the set of security videos. The preset association relationship may indicate that events represented by security videos in the subset of security videos have the preset association relationship.

Whether a display instruction for the subset of security videos is received by a display terminal may be determined.

In a case where the display instruction is received by the display terminal, the display terminal may be controlled to associatively display each security video in the subset of security videos.

In addition, a computer program product provided by some embodiments of the present disclosure may include computer-readable code, and when the computer-readable code is run on a device, a processor in the device may be caused to implement the following operations of the method for processing security data executed on the electronic device side.

A set of security videos collected by a plurality of security cameras may be obtained.

A subset of security videos having a preset association relationship may be determined from the set of security videos. The preset association relationship may indicate that events represented by security videos in the subset of security videos have the preset association relationship.

Whether a display instruction for the subset of security videos is received by a display terminal may be determined.

In a case where the display instruction is received by the display terminal, the display terminal may be controlled to associatively display each security video in the subset of security videos.

Those skilled in the art may further realize that operations in units and algorithm of each example described in connection with the embodiments disclosed herein may be implemented in electronic hardware, computer software, or a combination thereof. In order to clearly illustrate the interchangeability of hardware and software, the components and operations of each example may be generally described according to functions in the above description. Whether these functions may be implemented in hardware or software may depend on the particular applications and design constraint conditions of the technical solution. Those skilled in the art may implement the described functions using different methods for each application, but such implementation should not be considered as departing from the scope of the present disclosure.

The operations of the methods or algorithms described in connection with the embodiments disclosed herein may be implemented in hardware, in software modules executed by a processor, or in a combination thereof. The software modules may be placed in a random access memory (RAM), a memory, a read-only memory (ROM), an electrically programmable ROM, an electrically erasable programmable ROM, a register, a hard disk, a removable magnetic disk, a CD-ROM, or any other form of storage medium well known in the technical field.

It should be understood that the terms used herein may be for the purpose of describing particular example embodiments only and may not be intended to be limiting. Unless otherwise clearly indicated by the context, the singular forms "a", "an", and "the" as used herein may also include plural forms. The terms "include", "including", "contain", and "have" may be inclusive and therefore specify the presence of stated features, steps, operations, elements, and/or components, but may not preclude the presence or addition of one or more other features, steps, operations, elements, components, and/or combinations thereof. The method steps, processes, and operations described herein may not be construed as necessarily requiring execution in the particular order described or illustrated, unless explicitly stated. It should also be understood that additional or alternative steps may be used.

The foregoing may be merely some embodiments of the present disclosure, which may enable those skilled in the art to understand or implement the present disclosure. Various modifications to these embodiments may be apparent to those skilled in the art, and the general principles defined herein may be implemented in other embodiments without departing from the spirit or scope of the present disclosure. Thus, the present disclosure may not be limited to the embodiments shown herein, but may be accorded the widest scope consistent with the principles and novel features disclosed herein.

## Claims

1. A method for processing security data, **characterized by** comprising:
obtaining (101, 201) a set of security videos collected by a plurality of security cameras;
determining (102) a subset of security videos having a preset association relationship from the set of security videos, wherein the preset association relationship indicates that events represented by security videos in the subset of security videos have the preset association relationship;
determining (103) whether a display instruction for the subset of security videos is received by a display terminal; and
controlling (104, 206) the display terminal to associatively display each security video in the subset of security videos, in a case where the display instruction is received by the display terminal.

2. The method as claimed in claim 1, wherein determining (102) the subset of security videos having the preset association relationship from the set of security videos, comprises:
determining (202) video feature data of security videos in the set of security videos;
determining (203) whether the security videos in the set of security videos have a preset association relationship based on the determined video feature data; and
determining (204) a set of security videos having the preset association relationship as the subset of security videos.

3. The method as claimed in claim 2, wherein determining (202) the video feature data of the security videos in the set of security videos, comprises:
determining at least one of: generation time features of the security videos, image features of the security videos, biological features of the security videos, and text features of the security videos.

4. The method as claimed in claim 2, wherein
whether the security videos have the preset association relationship is determined through determining similarity of the video feature data of the security videos; or,
whether the security videos have the preset association relationship is determined through determining whether the video feature data of the security videos belong to a same clustering cluster.

5. The method as claimed in claim 1, wherein controlling (104, 206) the display terminal to associatively display each security video in the subset of security videos, comprises:
controlling a single display terminal to associatively display each security video in the subset of security videos through a multi-channel display manner.

6. The method as claimed in claim 1, wherein after obtaining (101, 201) the set of security videos collected by the plurality of security cameras, the method further comprises:
sequentially determining, according to an order of generation time, whether a security video in the set of security videos is a target security video, wherein the target security video represents a target security event;
controlling the display terminal to display an event notification of the target security event, in a case where the target security video in the set of security videos is determined for a first time; and
controlling the display terminal to not display the event notification of the target security event, in a case where the target security video in the set of security videos is not determined for the first time.

7. The method as claimed in claim 6, wherein the target security video is a video related to the target security event, and the target security event is a preset security event or a security event having a preset feature.

8. The method as claimed in claim 1, wherein after determining (102) the subset of security videos having the preset association relationship from the set of security videos, the method further comprises:
determining description information corresponding to the subset of security videos, wherein the description information comprises at least one of: an object behavior, an event location, and an event result; and
controlling the display terminal to display an event notification with the description information as an event title.

9. The method as claimed in claim 1, wherein after obtaining (101, 201) the set of security videos collected by the plurality of security cameras, the method further comprises:
determining a quantity of different target security events represented by the set of security videos; and
controlling the display terminal to display the quantity.

10. The method as claimed in any one of claims 1-9, wherein determining (102) the subset of security videos having the preset association relationship from the set of security videos, comprises:
determining a security video comprising a target object from the set of security videos; and
determining a set of security videos comprising the target object as the subset of security videos having the preset association relationship.

11. The method as claimed in any one of claims 1-9, wherein after determining (102) the subset of security videos having the preset association relationship from the set of security videos and before determining (103) whether the display instruction for the subset of security videos is received by the display terminal, the method further comprises:
extracting highlight images from security videos in the subset of security videos, wherein each of the highlight images is a highlight picture or a highlight video;
generating a thumbnail corresponding to the subset of security videos based on the extracted highlight images; and
controlling the display terminal to display the thumbnail.

12. The method as claimed in claim 11, wherein generating the thumbnail corresponding to the subset of security videos based on the extracted highlight images, comprises:
splicing the extracted highlight images according to a chronological order to generate the thumbnail corresponding to the subset of security videos; or
compositing the extracted highlight images in a grid-image form to generate the thumbnail corresponding to the subset of security videos.

13. An apparatus for processing security data, comprising:
an obtaining unit (401), configured to obtain a set of security videos collected by a plurality of security cameras;
a first determination unit (402), configured to determine a subset of security videos having a preset association relationship from the set of security videos, wherein the preset association relationship indicates that events represented by security videos in the subset of security videos have the preset association relationship;
a second determination unit (403), configured to determine whether a display instruction for the subset of security videos is received by a display terminal; and
a first control unit (404), configured to, in a case where the display instruction is received by the display terminal, control the display terminal to associatively display each security video in the subset of security videos.

14. An electronic device (500), comprising:
a memory (502), configured to store a computer program; and
a processor (501), configured to execute the computer program stored in the memory (502), wherein the processor (501), when the computer program is executed, is configured to implement the method for processing security data as claimed in any one of claims 1-12.

15. A computer-readable storage medium, storing a computer program, wherein when the computer program is executed by a processor, the method for processing security data as claimed in any one of claims 1-12 is implemented.
